# EUROPÄISCHE PATENTSCHRIFT

(11) **EP 0 877 237 B1**
(45) Veröffentlichungstag und Bekanntmachung des Hinweises auf die Patenterteilung: **04.12.2002**
(21) Anmeldenummer: 98107874.4
(22) Anmeldetag: 29.04.1998
(51) Int. Cl.: G01J 1/48

(54) **UV-Dosimeterfolie**
Foil for UV dosimeter
Feuille pour dosimètre UV

(30) Priorität: 09.05.1997 DE 19719721
(43) Veröffentlichungstag der Anmeldung: 11.11.1998
(73) Patentinhaber: SynTec Gesellschaft für Chemie und Technologie der Informationsaufzeichnung mbH, 06766 Wolfen (DE)
(72) Erfinder: Lischewski, Regina, 06766 Wolfen (DE); Sell, Ursula, 04509 Pohritzsch (DE); Marx, Jörg, Dr., 06844 Dessau (DE); Gohs, Uwe, Dr., 01097 Dresden (DE); Mehnert, Reiner, Prof., 04416 Markkleeberg (DE)
(74) Vertreter: Hertz, Oliver, Dr.

(56) Entgegenhaltungen:
- US-A- 4 296 194
- US-A- 4 400 458
- US-A- 5 117 116
- US-A- 5 310 618

## Beschreibung

Die Erfindung betrifft Test-, Dosimeter- oder Indikatormaterialien, die im ultravioletten Wellenlängenbereich empfindlich sind, insbesondere UV-empfindliche Teststreifen zur Messung von UV-Strahlungsmengen, und Verfahren zu deren Herstellung und Verwendung.

Die Strahlenhärtung mit Elektronen- oder UV-Strahlen ist ein wirksames Verfahren zur Erzeugung von Oberflächen mit bestimmten gewünschten Eigenschaften wie Härte, Glanz, Kratzfestigkeit oder Chemikalienbeständigkeit. Dieses Verfahren ist insbesondere sauber, emissionsfrei und relativ energiesparend. Im Bereich der Bestrahlung und Härtung bestimmter Materialien (z.B. Druckfarben, photovernetzbare Klebstoffe, Beschichtungen von Möbeln, Türen oder anderen Holzerzeugnissen) werden neben Elektronenstrahlen zunehmend UV-Strahlen verwendet. Bei der Anwendung der Strahlenhärtung besteht ein Interesse daran, die zugeführte Strahlung exakt zu dosieren. Einerseits muß sichergestellt werden, daß die gewünschte Härtung bis in eine genügend Beschichtungstiefe erfolgt. Andererseits kann durch Vermeidung einer übermäßigen Bestrahlung Energie gespart, die Produktivität von Anlagen erhöht und eine Überhärtung der zu behandelnden Oberfläche vermieden werden.

Zur optimalen, reproduzierbaren Dosierung unter verschiedensten Anwendungsbedingungen ist eine Messung der aktuellen Strahlungsleistung einer UV-Quelle und eine regelmäßige Prüfung der Lampenleistung der UV-Quelle durchzuführen, um eine hohe Bestrahlungs- bzw. Härtungsqualität sicherzustellen.

Es ist bekannt, UV-Strahlen mit Sensoren auf optoelektronischer Basis oder mit Testmaterialien zu messen, die zur Realisierung photochemischer Umwandlungen bei UV-Bestrahlung eingerichtet sind.

Optoelektronische Sensoren sind in der Regel kompakte Meßgeräte, die wegen der räumlichen Ausdehnung der optoelektronischen Sensoren nicht zusammen mit der zu beschichtenden Oberfläche (z.B. Rollenware) an der UV-Quelle vorbeizuführen sind, da der Quellen-Oberflächen-Abstand nicht ausreicht.

Ein weiterer Nachteil von optoelektronischen Sensoren (insbesondere auf der Basis von Lichtleiterfasern) besteht in deren Empfindlichkeit gegen das Auftreten von Staub, Farbnebeln und anderen Verschmutzungen.

Photochemische Testmaterialien basieren auf photochemischen Umwandlungen infolge von Strahlungsabsorption. So ist aus US 4 788 433 bekannt, mit einem photochemischen Testmaterial die Sonnenbestrahlung von Haut zu messen. Ferner wird in US 5 411 835 ein photochromatisches Material beschrieben, das bei Absorption im Wellenlängenbereich von 290 bis 365 nm eine Änderung zeigt. Die Farbänderungen von photochemischen Testmaterialien, die in US 5 028 792 und US 5 436 115 beschrieben sind, werden durch UV-induzierten Protonentransfer ausgelöst.

Diese bekannten photochemischen Testmaterialien sind zum Einsatz bei der oben angegebenen technischen Anwendung nicht geeignet, da sie dazu eingerichtet sind, eine UV-Bestrahlung über einen längeren Zeitraum zu bestimmen. Die Empfindlichkeit der bekannten Materialien reicht nicht aus, um eine UV-Bestrahlung, die beispielsweise bei Härtungsanlagen im Millisekundenbereich liegt, zu erfassen oder anzuzeigen.

Die Verwendung von Diazoniumverbindungen bei Lichtempfindlichen Materialien ist aus US 5 310 618 A, US 4 400 458 A und US 4 296 194 A bekannt.

Es besteht ein Interesse an einer wirksamen UV-Messung, die sowohl die Empfindlichkeit optoelektronischer Sensoren als auch die einfache Handhabbarkeit photochemischer Materialien besitzt. Dieses Interesse ist nicht auf die obengenannte Strahlenhärtung beschränkt, sondern betrifft sämtlichen Anwendungen, bei denen mit hoher Genauigkeit bei relativ kurzen Bestrahlungszeiten Strahlungsmengen exakt zu erfassen sind.

Die Aufgabe der Erfindung ist, ein verbessertes UV-empfindliches Material, das eine hohe Empfindlichkeit und eine einfache Handhabbarkeit aufweist, und Verfahren zu dessen Herstellung und Verwendung anzugeben.

Diese Aufgabe wird durch Dosimetermaterial bzw. ein Verfahren mit den Merkmalen gemäß den Patentansprüchen 1 bzw. 7 gelöst. Eine erfindungsgemäße Verwendung des Dosimetermaterials ist in Patentanspruch 9 angegeben. Vorteilhafte Ausführungsformen der Erfindung ergeben sich aus den abhängigen Ansprüchen.

Grundlage der Erfindung ist die Schaffung eines hochempfindlichen Dosimetermaterials mit einer Diazoniumverbindung, die eine Absorption im ultravioletten Wellenlängenbereich besitzt und in einem Bindemittel angeordnet ist. Das Bindemittel mit der inkorporierten Diazoniumverbindung ist vorzugsweise schichtförmig auf einem Trägermaterial angeordnet oder bei genügender Bindemitteldicke als freitragende Dosimeterschicht ausgebildet.

Das Trägermaterial ist vorzugsweise ein flexibles oder biegsames Material, z.B. eine Folie oder ein Material auf der Grundlage von Papier oder auch ein dünnes Metallblech oder eine Glasplatte. Das Trägermaterial kann aber auch starr ausgebildet sein. Das Trägermaterial ist insbesondere beim Einsatz bei Bestrahlungen von Material, das auf einem Transportband an einer UV-Quelle (UV-Strahler, UV-Lampe oder dgl.) vorbeigeführt wird, in Schichtform ausgebildet. Die Schichtdicke ist dann geringfügig kleiner als der Abstand zwischen der UV-Quelle und der Oberfläche des zu bestrahlenden Materials.

Die UV-empfindliche Diazoniumverbindung wird durch ein Diazoniumsalz gebildet, das die allgemeine Formel: 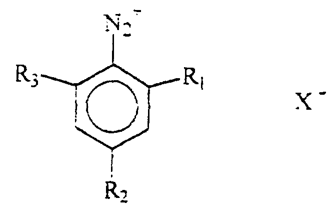 besitzt. Dabei werden R₁, R₂, R₃ und das Gegenion X⁻ entsprechend einer Kombination aus den folgenden Möglichkeiten ausgewählt.
- R₁:: H, Halogen, Alkyl mit C₁-C₅ (vorzugsweise C₁, C₂), Alkoxy mit C₁-C₅ (vorzugsweise C₁, C₂), Aryloxy,
- R₂:: H, Halogen, Alkyl mit C₁-C₅ (vorzugsweise C₁, C₂), Alkoxy mit C₁-C₅ (vorzugsweise C₁, C₂), Aryloxy, NR'R" (R', R" gleiche oder verschiedene Alkylverbindungen oder heterozyklische Armine, z.B. Morpholin, Piperidin oder dgl.), oder COOR₄ (R₄ Alkyl mit C₁-C₅), und
- R₃:: H, Alkoxy mit C₁-C₅, und
- X⁻:: Anionen, die in der Diazotypie gebräuchlich sind, z.B. BF₄, ZnCl₂, PF₆, BPh₄, oder perfluorierte aliphatische oder aromatische Anionen, z.B. Perfluoroktanat, Perfluorotetraphenylboranat.

Dabei können R₁, R₂ und R₃ gleich oder verschieden gewählt sein. Vorzugsweise sind jedoch R₁ oder R₂ eine Alkoxy-Verbindung.

Als Bindemittel wird erfindungsgemäß eine Polymerverbindung verwendet. Bevorzugte Polymerverbindungen sind Zelluloseester (insbesondere Zelluloseacetat und -propionate), Polyvinylbutyrale, Polyvinylacetat oder Polycarbonat oder Zusammensetzungen aus diesen.

Erfindungsgemäß kann das Bindemittel mit der inkorporierten UV-empfindlichen Diazoniumverbindung zusätzlich eine Stabilisatorsäure enthalten. Als Stabilisatorsäure wird vorzugsweise eine organische Carbon-, Dicarbon- oder Sulfonsäure, z.B. Trichloressigsäure, Bernsteinsäure, Zitronensäure, Sulfosalicylsäure oder Toluensulfonsäure, verwendet.

Ein UV-empfindliches Dosimetermaterial wird hergestellt, indem eine Bindemittellösung oder -dispersion zur Bildung der oben angegebenen Polymerverbindungen mit einem geeigneten Lösungsmittel angesetzt und eine oder mehrere der oben angegebenen Diazoniumverbindungen zugesetzt werden. Nach schichtförmigem Auftrag auf einem Trägermaterial erfolgt ein Lösungsmittelentzug (Trocknung). Bei genügender Schichtdicke, die beispielsweise durch einen mehrfachen Auftrag nach Trocknung des vorhergehenden Auftrags erzielt werden kann, ist es möglich, das Bindemittel mit der inkorporierten Diazoniumverbindung vom Trägermaterial zur Bildung eines freitragenden Dosimetermaterials abzulösen. Der Auftrag auf das Trägermaterial erfolgt durch eine übliche Beschichtungstechnik wie Bepinseln, Besprühen, Gießen, Tauchen oder dgl. Beim Ansatz der Beschichtungslösung kann ferner eine Stabilisatorsäure wie oben genannt, zugesetzt werden.

Die UV-empfindliche Diazoniumverbindung wird bei UV-Absorption in Bestandteile geringerer Absorption zerlegt (Zerstörung der Diazoniumverbindung). Der Anteil der inkorporierten Diazoniumverbindung, der durch die UV-Bestrahlung zerstört wird, ist abhängig von der Strahlungsmenge oder UV-Dosis. Der Anteil der zerstörten Diazoniumverbindung wird entsprechend einer der folgenden Vorgehensweisen ermittelt.

Ein erstes Verwendungs- oder Auswertungsverfahren basiert darauf, die Extinktion der nach Bestrahlung im Dosimetermaterial noch vorhandenen Diazoniumverbindung durch ein geeignetes Absorptions- oder Transmissionsmeßgerät direkt zu bestimmen. Diese Bestimmung kann in einem separaten Vorgang unabhängig von einem Meß-Bestrahlungsvorgang durchgeführt werden. Um diese Extinktionsbestimmung zu erleichtern, wird vorzugsweise ein freitragendes Dosimetermaterial oder ein UVdurchlässiges Trägermaterial verwendet. Eine Extinktionsbestimmung aus einer Reflektionsmessung ist jedoch auch möglich.

Die Differenz zwischen der Extinktion der bestrahlten Probe und der Extinktion der unbestrahlten Probe ist ein direktes Maß für die aufgetroffene Strahlungsmenge (Photonenzahl).

Entsprechend einem zweiten Auswertungsverfahren ist es möglich, dem Dosimetermaterial bei der Herstellung eine Kupplungskomponente zuzusetzen, die dazu eingerichtet ist, nach der Bestrahlung bei einem Entwicklungsschritt den nicht zerstörten Anteil der Diazoniumverbindungen in einen Azofarbstoff umzusetzen. Als Kupplungskomponente ist ein in der Diazotypie gebräuchlicher Kuppler einsetzbar. Der Kuppler kann beispielsweise eine CH-acide Verbindung (z.B. Acetoacetanilid oder Cyanessigsäuremorpholid), eine heterozyklische Verbindung (z.B. substituierte Prrazolone, Triazoliumsalze) oder ein Kuppler mit einem phenolischen oder naphtholischen Grundgerüst (z.B. Resorcin, Beta-Naphthol, substituierte Naphthoesäureanilide) sein.

Die Entwicklung des kupplerhaltigen Dosimetermaterials erfolgt, indem dieses nach der Bestrahlung einer alkalischen Lösung (z.B. Ammoniumwasser, Natrium- oder Ammoniumcarbonatlösung, alkalische Pufferlösung oder dgl.) oder einer entsprechenden alkalischen Gasatmosphäre (z.B. Ammoniakdampf oder dgl.) ausgesetzt wird. Die nach der Bestrahlung in dem Dosimetermaterial noch vorhandene Diazoniumverbindung und der Kuppler werden in einen Azofarbstoff umgesetzt, dessen Menge nach dem Entwicklungsschritt durch einen Meßschritt spektroskopisch ermittelt wird. Die spektroskopische Messung erfolgt beispielsweise mit einem Spektralphotometer, Densitometer oder Reflektionsmeßgerät). Die ermittelte Farbdichte des Azofarbstoffs (Extinktion) ist ein umgekehrt porportionales Maß für die absorbierte Strahlungsmenge.

Gemäß einer bevorzugten Verwendung des erfindungsgemäßen Dosimetermaterials werden UV-empfindlich beschichtete Trägermaterialstreifen (z.B. aus Folie oder Papier) mit einer möglichst geringen Gesamtschichtdicke zusammen mit dem zu bestrahlenden Material durch eine UV-Bestrahlungsanlage geführt. Die UV-empfindliche Diazoniumverbindung im Dosimetermateriai wird dosisabhängig zerstört. Der Anteil der zerstörten Verbindung wird anschließend gemäß einem der obengenannten Verfahren gemessen.

Die Vorteile der Erfindung bestehen darin, daß das Dosimetermaterial einfach und reproduzierbar herstellbar ist, bei einem zu überwachenden Bestrahlungsvorgang ohne ein zusätzliches Meßgerät eingesetzt werden kann, weitgehend unempfindlich gegen Verunreinigungen ist und eine gegenüber herkömmlichen photochemischen Testmaterialien wesentlich erhöhte Empfindlichkeit aufweist. Weitere Vorteile der Erfindung ergeben sich aus den im folgenden zusammengestellten Beispielen erfindungsgemäßer Dosimetermaterialien.

### Beispiele

1. Eine Polyethylenterephthalatfolie wird mit folgender Zusammensetzung beschichtet:
   1 g Cellulosediacetat
   9 g Aceton
   0,06 g 2,4-Dimethoxybenzendiazoniumtetrafluoroborat
   0,01 g Sulfosalicylsäure.
   Man erhält etwa 300 cm² beschichtetes Material, welches zu Streifen geschnitten wird. Diese Streifen werden auf einem Transportband an einer UV-Bestrahlungsanlage vorbeigeführt. Der UV-Strahler hat eine Stärke von 120 W/cm. Bei einer Geschwindigkeit von 100 m/min nimmt die Dichte des Diazoniumsalzes um etwa 30% ab. Die Dichtemessung erfolgt an einem Spektralphotometer.
2. 100 g einer 12% Polyvinylbutyrallösung in Alkohol, die
   0,7 g 4-Methoxybenzendiazoniumhexafluorophosphat und
   0,2 g Zitronensäure
   enthält, werden mit einer Schichtdicke von etwa 8 µm auf Celluloseacetatfolie aufgetragen. Die UV-Bestrahlung wird wie unter 1. durchgeführt. Bei einer Bestrahlungszeit von 20 ms nimmt die Dichte um etwa 50% ab.
3. 10 g einer 9%igen Celluloseacetat/-propionatlösung in Methanol/Methylenchlorid wird mit einem Rakel auf polyethylenbeschichtetes Papier aufgetragen. In der Lösung befindet sich außerdem
   0,02 g 2-Ethoxybenzendiazoniumtetrafluoroborat und
   0,8 g P-Toluensulfonsäure
   0,03 g 2-Hydroxy-3-naphthoesäureanilid als Kupplungskomponente.
   Nach der Bestrahlung (siehe 1.) wird der Teststreifen in konzentrierter Ammoniumacetatlösung entwickelt. Die entstandene violette Farbe wird mit einem Macbeth-Densitometer vermessen. Bei einer Geschwindigkeit des Transportbandes von 50 m/min erhält man einen Restdiazoniumgehalt von 60%.
4. Eine flexible Polyesterfolie wird mit der folgenden Lösung beschichtet:
   1,5 g Polyvinylacetat
   10 g Aceton
   2 g Methyl-Ethylketon
   0,08 g 2-Methoxy-5-Chlorbenzendiazoniumperfluorooktanat
   0,02 g Maleinsäure.
   Die Bestrahlung erfolgt wie unter 1. beschrieben. Die Abnahme der Dichte bei einer Bestrahlungszeit von 10 ms liegt bei etwa 25%.
5. 100 g einer 10% Celluloseacetatlösung in Aceton , die
   0,8 4-Morpholino-2-methoxybenzendiazoniumhexafluorophosphat und
   0,3 g p-Toluensulfonsäure
   enthält, wird mit einer Schichtdicke von etwa 10 µm auf Polyethylenterephthalat-Folie aufgetragen. Die UV-Bestrahlung wird wie unter 1 durchgeführt. Bei einer Bestrahlungszeit von 10 ms nimmt die Dichte um etwa 50% ab.

## Patentansprüche

1. UV-empfindliches Dosimetermaterial, das mindestens eine Diazoniumverbindung, die eine Absorption im ultravioletten Wellenlängenbereich besitzt und ein Bindemittel enthält, wobei die Diazonium-Verbindung ein Diazoniumsalz der Struktur 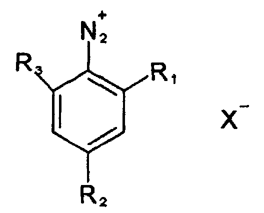 ist und wobei R₁, R₂, R₃ und X aus den folgenden Gruppen ausgewählt sind:
R₁: H, Halogen, Alkyl mit C₁-C₅, Alkoxy mit C₁-C₅, Aryloxy,
R₂: H, Halogen, Alkyl mit C₁-C₅, Alkoxy mit C₁-C₅, Aryloxy, NR NR'R", R', R", gleiche oder verschiedene Alkylverbindungen oder heterozyklische Amine, COOR₄ (R₄ Alkyl mit C₁-C₅), und
R₃: H, Alkoxy mit C1-C5, und
X⁻: Anionen, die in der Diazotypie gebräuchlich sind, oder perfluorierte aliphatische oder aromatische Anionen.

2. Dosimetermaterial gemäß Anspruch 1, bei dem das Bindemittel ein Polymer ist.

3. Dosimetermaterial gemäß einem der Ansprüche 1 bis 2, das ein Stabilisatormittel enthält.

4. Dosimetermaterial gemäß einem der Ansprüche 1 bis 3, das eine Farbkupplerkomponente enthält.

5. Dosimetermaterial gemäß einem der Ansprüche 1 bis 4, bei dem das Bindemittel mit der Diazoniumverbindung schichtförmig auf einem Trägermaterial angeordnet ist.

6. Dosimetermaterial gemäß Anspruch 5, bei dem das Trägermaterial ein schichtförmiges flexibles Material ist.

7. Verfahren zur Herstellung eines UV-empfindlichen Dosimetermaterials gemäß einem der Ansprüche 1 bis 6, umfassend die Schritte:
- Ansatz einer Bindemittellösung oder -dispersion
- Zusatz der UV-absorbierenden Diazoniumverbindung und
- Lösungsmittelentzug und Trocknung.

8. , Verfahren gemäß Anspruch 7, bei dem vor dem Lösungsmittelentzug die Bindemittellösung oder -dispersion mit der inkorporierten Diazoniumverbindung schichtförmig auf ein Trägermaterial aufgetragen wird.

9. Verfahren zur Messung einer UV-Strahlungsmenge mit einem Dosimetermaterial gemäß einem der Ansprüche 1 bis 6, bei dem die absorbierte Strahlungsmenge aus einer Extinktionsmessung am Dosimetermaterial ermittelt wird.

10. Verfahren gemäß Anspruch 9, bei dem bei der Extinktionsmessung die Extinktion der Diazoniumverbindung im Dosimetermaterial gemessen wird.

11. Verfahren gemäß Anspruch 9, bei dem nach UV-Bestrahlung bei einem Entwicklungsschritt im Dosimetermaterial ein Azofarbstoff gebildet wird und bei der Extinktionsmessung die optische Dichte des Azofarbstoffs erfasst wird.

## Claims

1. An ultraviolet-sensitive dosimeter material comprising at least one diazonium compound having an absorption in the ultraviolet wavelength range and a binder, said diazonium compound being a diazonium salt of the formula: 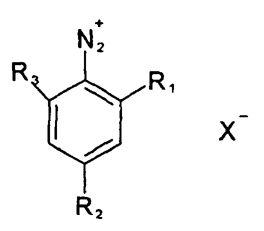 wherein R₁, R₂, R₃ and X are selected from the following groups:
R₁: H, halogen, C₁-C₅ alkyl; C₁-C₅ alkoxy, aryloxy, and
R₂: H, halogen, C₁-C₅ alkyl; C₁-C₅ alkoxy, aryloxy, NR'HR", R', R" being the same or differing alkyl compounds or heterocyclic amines, COOR₄ (where R₄ is C₁-C₅ alkyl),
R₃: H, C₁-C₅ alkoxy and
X⁻: anions which are normally used in the diazo process or perfluorinated aliphatic or aromatic anions.

2. The dosimeter material according to claim 1 wherein said binder is a polymer.

3. The dosimeter material according to anyone of claims 1 to 2 wherein a stabilizing agent is contained.

4. The dosimeter material according to anyone of claims 1 to 3 wherein a color coupler component is contained.

5. The dosimeter material according to anyone of claims 1 to 4 wherein said binder with said diazonium compound is disposed as a coating on a carrier material.

6. The dosimeter material according to claim 5 wherein said carrier material is a layer-shaped, flexible material.

7. A process for the production of an ultraviolet-sensitive dosimeter material according to anyone of claims 1 to 6 comprising the steps of:
- providing a binder solution or dispersion
- adding the ultraviolet absorbing diazonium compound, and
- withdrawing the solvent and drying.

8. The process according to claim 7 wherein, prior to the withdrawal of the solvent, the binder solution or dispersion along with the incorporated diazonium compound is applied on a carrier material as a coating.

9. The process for measuring a ultraviolet radiation quantity using a dosimeter material according to anyone of claims 1 to 6 wherein the radiation quantity absorbed is determined by measuring the extinction of the dosimeter material.

10. The process according to claim 9 wherein upon measuring the extinction, the extinction of the diazonium compound is measured in the dosimeter material.

11. The process according to claim 9 wherein following the ultraviolet radiation an azo dye is formed in the course of a developing step in the dosimeter material and the optical density of the azo dye is detected in the extinction measurement.

## Revendications

1. Matériau de dosimètre sensible aux rayons ultraviolets, qui comprend au minimum un composé diazonium, qui possède une absorption dans le domaine des longueurs d'ondes ultraviolettes et comprend un liant, dans lequel le composé diazonium est un sel de diazonium de structure suivante 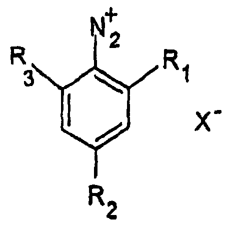 et dans lequel R₁, R₂, R₃ et X sont choisis parmi les groupes suivants :
R₁ : H, halogène, alkyle en C₁ à C₅, alcoxy en C₁ à C₅, aryloxy,
R₂ : H, halogène, alkyle en C₁ à C₅, alcoxy en C₁ à C₅, aryloxy, NR, NR'R", R', R", composée alkyle identiques ou différents ou amines hétérocycliques, COOR₄ (R₄ alkyle en C₁ à C₅), et
R₃ : H, alcoxy en C₁ à C₅, et
X⁻ : des anions qui sont fréquents dans la diazotypie, ou des anions aliphatiques ou aromatiques perfluorés.

2. Matériau de dosimètre selon la revendication 1, dans lequel le liant est un polymère.

3. Matériau de dosimètre selon l'une des revendications 1 à 2, qui contient un produit stabilisateur.

4. Matériau de dosimètre selon l'une des revendications 1 à 3, qui contient une substance chromogène.

5. Matériau de dosimètre selon l'une des revendications 1 à 4, dans lequel le liant est disposé par couches avec le composé diazonium sur un matériau de support.

6. Matériau de dosimètre selon la revendication 5, dans lequel le matériau de support est un matériau flexible en couches.

7. Procédé de fabrication d'un matériau de dosimètre sensible aux rayons ultraviolets selon l'une des revendications 1 à 6, comprenant les étapes suivantes :
- dépôt d'une solution ou d'une dispersion de liant,
- ajout du composé diazonium absorbant les rayons ultraviolets et
- retrait du solvant et séchage.

8. Procédé selon la revendication 7, dans lequel, avant le retrait du solvant, la solution ou la dispersion de liant est étalée en couches avec le composé diazonium incorporé sur un matériau de support.

9. Procédé de mesure d'une quantité de rayonnement ultraviolet avec un matériau de dosimètre selon l'une des revendications 1 à 6, dans lequel la quantité de rayonnement absorbé est calculée par mesure de l'absorbance sur le matériau de dosimètre.

10. Procédé selon la revendication 9, dans lequel, lors de la mesure de l'absorbance, la densité optique du composé diazonium est mesurée dans le matériau de dosimètre.

11. Procédé selon la revendication 9, dans lequel, après une exposition aux rayons ultraviolets, un colorant azoïque est formé par l'intermédiaire d'une étape de développement dans le matériau de dosimètre, et dans lequel la densité optique du composé azoique est déterminée lors de la mesure de l'absorbance.
